# EUROPEAN PATENT APPLICATION

(11) **EP 2 868 291 A1**
(43) Date of publication of application: **06.05.2015**
(21) Application number: 13810652.1
(22) Date of filing: 28.06.2013
(51) Int. Cl.: A61C 8/00, A61C 13/263

(54) **DENTAL IMPLANT**

(30) Priority: 29.06.2012 KR 20120071311; 20.12.2012 KR 20120149984
(71) Applicant: Dentoz Co., Ltd., Incheon 406-743 (KR)
(72) Inventor: CHOI, Ho-Jun, Incheon 406-743 (KR)
(74) Representative: Gulde & Partner
(86) International application number: PCT/KR2013/005763
(87) International publication number: WO 2014/003484

(57) **Abstract**

The present invention relates to a dental implant, and more particularly, to a dental implant in which a fixture and an abutment are together by a separate screw post so as to prevent the breakage of an implant screw tightening part and uniformly transmit forces over the entirety of a contact surface, to thereby prevent stresses from being partially concentrated, and in which the screw-tightening direction between the fixture and the abutment is variable so as to improve the coupling force between the fixture and the abutment and fundamentally prevent a screw from becoming loosened. The dental implant of the present invention comprises said fixture and abutment, the abutment including a lower abutment to be fitted onto the fixture, and an upper abutment connected to an upper portion of the lower abutment, the lower abutment and the upper abutment being separate from each other. The upper abutment and the fixture are coupled and fixed by the screw post.

## Description

### [Technical Field]

The present invention relates to a dental implant, and more particularly, to a dental implant in which a fixture and an abutment are together by a separate screw post so as to prevent the breakage of an implant screw tightening part and uniformly transmit forces over the entirety of a contact surface, to thereby prevent stresses from being partially concentrated, and in which the screw-tightening direction between the fixture and the abutment is variable so as to improve the coupling force between the fixture and the abutment and fundamentally prevent a screw from becoming loosened.

### [Background Art]

Generally, an implant refers to an artificial substitute which is configured to reenact the same form and function as that of natural teeth. The implant is composed of a fixture 10 made of titanium which is made in the shape of the root of a natural tooth so as to be installed at an alveolar bone A as a screw thread 11 is formed on the outer circumference, an abutment which is connected to the upper portion of the fixture 10 and of which the upper portion is coupled with an artificial tooth B, and a fixing screw 30 which fixes the fixture 10 and the abutment 20.

That is, according to the conventional implant structure, an abutment 20 is positioned on the upper portion of the fixture 10 having a screw hole, then a fixing screw 30 is inserted into the screw hole of the fixture through the abutment 20 so that the fixture 10 and the abutment 20 are fixed and coupled by rotation of the fixing screw 30.

However, in this configuration, the head portion of the fixing screw 30 is inserted into the inside of the abutment 20 so as to be supported to the coupling unit of the fixture 10 and the abutment 20, and thus the length of the fixing screw 30 is short and thereby the coupling force between the fixture 10 and the abutment 20 is weak, and when a mastication operation such as chewing foods is performed, the load is concentrated on a narrow surface of the fixing screw 30, and thus the fixing screw 30 may be broken or loosened in the coupling unit of the fixture 10 and the abutment 20.

In order to solve such a problem, US Patent Publication No. US2003/0224328, which is a prior art, discloses a tooth implant 1 having a biological function. The invention discloses a dental implant 1 having a biological function for attaching a crown part 50 on the gum bone 64 inside a patient's mouse, the dental implant 1 including a root part 3 which is implanted under the inner gum line 62 of a socket formed on the gum bone 64 of the patient, a means for fixing the root part 3 inside the socket formed on the gum bone 64 of the patient, a crown part 50, and a flexible abutment post 18 for connecting the crown part 50 to the root part 3, in which the flexible abutment post 18 is formed to be bendable so that the crown part 50 may be moved toward the root part 3 which is fixed inside the socket which is formed at the patient's gum bone 64.

The configuration is featured in that a supply path for distributing human growth factors to the bone structure which surrounds the implant part, but the configuration is complicated, and thus the coupling force between the crown part 50 and the root part 3 is weak, and the screw coupling of the crown part 50 and the root part 3 by the abutment post 18 may be loosened.

Further, in this configuration, the screw part 5 is integrally formed in the upper installation stand 2 and thus the upper installation stand 2 where the screw part 5 has been formed may be broken, and when the upper installation stand 2 is broken, it becomes difficult to remove the screw part 5.

Further, the screw part 5 is screw-coupled only at the inner side of the artificial tooth fixture 11, and thus the area of the surface of the screw-coupled portion is small and thereby the coupling force between the artificial tooth fixture 11, the upper installation stand 2, and the lower installation stand 6 is weak and the screw coupling may be loosened.

Further, according to the conventional configuration, the abutment does not contact the gum part and the entirety of the crown part 50 is connected to the root part 3, and thus this can be applied only when the gum bone completely exists and plaques and tartar may be deposed around the gum line 62.

### [Disclosure]

### [Technical Problem]

An object of the present invention is to provide a dental implant which uses a separate screw post for the coupling of a fixture and an abutment so as to increase the area where the fixture and the abutment are coupled so as to increase the coupling force between the fixture and the abutment, minimize the danger of breakage of the screw post, and easily remove the broken screw post at the time of the breakage of the screw post.

Further, another object of the present invention is to provide a dental implant in which a screw post is first coupled with a fixture and then an abutment is coupled and fixed with the upper portion thereof so as to make the coupling between the fixture and the abutment easy and accurate.

Further, another object of the present invention is to provide a dental implant in which an abutment is composed of an upper abutment and a lower abutment so that the shapes of the upper and lower abutments such as the height, gradient, and thickness, etc. may be variously selected to be assembled.

Further, another object of the present invention is to provide a dental implant in which a screw tightening part is separated into two parts, one between the upper abutment and a screw post and the other between a fixture and the screw post, and at the same time, the tightening directions of the screw tightening part are set to be opposite to each other so as to improve the coupling force between the fixture and the abutment and fundamentally prevent the screw from being loosened.

Further, another object of the present invention is to provide a dental implant in which a screw ring a coupling hole are coupled between a screw post and upper and lower abutments so as to improve the coupling force between the upper and lower abutments and between the upper and lower abutments and the fixture.

Further, another object of the present invention is to provide a dental implant which sets the direction of the fixture, the tightening direction between the screw post and upper and lower abutments, and the tightening direction between the screw post and the fixture to be opposite to each other so as to maximize the effects of preventing the screw post from being loosened.

Further, another object of the present invention is to a dental implant in which a step ring is inserted into the inside of a lower abutment or an area between an upper abutment and a lower abutment so that the lower abutment is closely attached to the post of a screw post formed of a polygonal shape so as to maintain a firm fixed state despite a tolerance which is generated in the process of manufacturing an implant.

Further, another object of the present invention is to provide a dental implant in which a seating groove and a seating ridge are formed on the outer circumference of an upper abutment and a lower abutment so as to form a projected part and a groove corresponding to the shape of the seating groove and the seating ridge at the inner surface of an artificial tooth so as to fix the upper abutment and the lower abutment.

### [Technical Solution]

### The present invention provides

A dental implant including a fixture, where a screw thread is formed at an outer circumference, an abutment which is inserted into the fixture, wherein the abutment is divided into a lower abutment which is inserted into the fixture, and an upper abutment which is connected to an upper part of the lower abutment, and the upper abutment and the fixture are coupled and fixed by the screw post.

First and second female screws, where a screw post is coupled, may be respectively formed in the fixture and the upper abutment, and first and second male screws may be formed in the screw post at a position corresponding to the first and second female screws.

The first female screw and the first male screw, and the second female screw and the second male screw may be formed to have screw threads of opposite directions.

A projected part may be formed at a bottom of the upper abutment, and a placing groove, into which the projected part is fitted, may be formed at an upper end of the lower abutment.

An extension part, where a second female screw has been formed at an inner circumference, may be projected at the bottom of the upper abutment, and a insertion groove, into which the extension part is inserted, may be formed at the upper end of the lower abutment.

A coupling groove may be formed at a lower part of the lower abutment, and a fixing part, which is fitted onto the coupling groove, may be projected at an upper end of the fixture.

A seating groove of the upper abutment may be formed at an outer circumference, and a seating ridge may be formed at an outer circumference of the lower abutment.

The screw post may include first and second male screws and a polygonal post formed between the first and second male screws.

A screw ring, where a second female screw is formed at an inner circumference and a third male screw is formed at an outer circumference, may be formed at an outer circumference of the second male screw of the screw post, and a first coupling hole, where a third female screw, which is coupled with a third male screw, is formed, may be formed in the upper abutment.

A fastener, where a fourth male screw is formed at an outer circumference, may be fitted onto a post of the screw post, and a second coupling hole, where a fourth female screw, onto which a fourth male screw is fitted, may be formed at the lower abutment.

A rotation prevention part formed of a polygonal shape may be formed at a bottom part of the fastener, and a rotation prevention groove, into which the rotation prevention part is fitted onto, may be formed at an upper part of the fixture.

A first step part of a sawtooth shape, which is inclined upward toward a direction in which a screw post, which is coupled with an inner side of the fixture, may be formed at a upper end of the fastener, and a first step ring, where a second step part of a shape corresponding to the first step part is formed at a lower end, may be formed between the screw ring and the fastener.

A screw direction of the first female screw and the first male screw may be opposite to a screw direction of a screw thread, which is formed in the fixture, and second to fourth female screws, and second to fourth male screws.

A first step part of a sawtooth shape, which is inclined upward toward a direction, in which a screw post, which is coupled with an inner side of the fixture, is loosened, may be formed at an inside of the lower abutment, and a first step ring, where a second step part of a shape corresponding to the first step part is formed, may be inserted into an inside of the lower abutment in the upper part of the first step part.

A third step part of a step shape including an inclined surface, which is inclined upwards toward a direction in which a screw post, which is coupled at an inside of the fixture, is loosened, may be formed at an upper end of the lower abutment, and a second step ring, where a fourth step part of a shape corresponding to a third step part is formed at a bottom, may be installed between the lower abutment and the upper abutment.

### [Advantageous Effects]

According to the present invention, by using a separate screw post for the coupling between a fixture and an abutment, the area where the fixture and the abutment are screw-coupled increases so that the coupling force between the fixture and the abutment increases and the overall load is distributed in the screw-coupled portion and thereby the danger of the screw post by the stress concentration may be minimized, and at the time of the breakage of the screw post, the broken screw post may be easily removed.

Further, according to the present invention, a screw post is coupled with a fixture and then an abutment is coupled and fixed on the upper portion thereof so that the coupling between the fixture and the abutment may become easy and accurate.

According to the present invention, the abutment is divided into an upper abutment and a lower abutment so that the shapes of the upper and lower abutment such as the height, gradient, and thickness may be variously selected so as to be then assembled.

Further, according to the present invention, a screw tightening part is divided into a part between an upper abutment and a screw post and a part between a fixture and a screw post, and the tightening directions of the screw tightening part may be set to be opposite to each other so that the coupling force between the fixture and the abutment may be improved, the screw may be fundamentally prevented from being loosened, and the contacted part between the fixture and the abutment may be closely attached without getting any partial stress, and thus the intrusion of external materials into a gap in the tightening part of the fixture and the abutment may be prevented and thereby generation of inflammation and mucositis around an implant due to the propagation of germs may be prevented.

Further, according to the present invention, since a screw ring and a coupling hole between a screw post and upper and lower abutments are coupled by insertion, the coupling force between the upper and lower abutments and the coupling between the upper and lower abutments and the fixture may be improved, and since the direction of the fixture, the coupling direction between the screw post and the upper and lower abutments, and the coupling direction between the screw post and the fixture are set to be opposite to each other, the effects of preventing the screw post from being loosened may be maximized.

Further, according to the present invention, a step ring is inserted into the inside of the lower abutment or an area between the upper abutment and the lower abutment so that the inner surface of the lower abutment is closely fixed at the outer circumference of the screw post formed of a polygonal shape, and thus a firm, fixed state may be maintained despite a tolerance which is generated in the process of manufacturing an implant.

Further, according to the present invention, a seating groove and a seating ridge are respectively formed on the outer circumference of the upper abutment and the lower abutment so that a projected part and a groove may be formed according to the shape of the seating groove and the seating ridge at the inner surface of an artificial tooth, and thus the upper abutment and the lower abutment are firmly fixed so as to prevent the loosening phenomenon.

### [Description of Drawings]

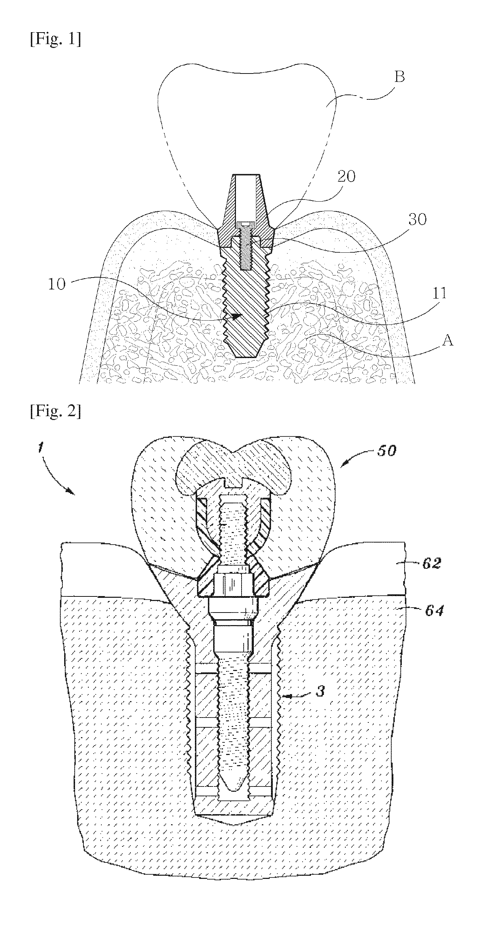

FIG. 1 schematically illustrates a general implant according to a conventional art.
FIG. 2 illustrates a tightened implant according to a conventional art.
FIG. 3 is a cross-sectional diagram of a dental implant according to an embodiment of the present invention.
FIG. 4 is a cross-sectional diagram disassembled parts of the dental implant of FIG. 3.
FIGS. 5A, 5B, and 5C are cross-sectional diagrams separately illustrating the embodiment of an abutment in the invention shown in FIG. 3.
FIGS. 6A, 6B, and 6C illustrate a screw post according to an embodiment of the present invention shown in FIG. 3.
FIG. 7 is a cross-sectional diagram of a dental implant according to a second embodiment of the present invention.
FIG. 8 is a cross-sectional diagram of a dental implant according to a third embodiment of the present invention.
FIG. 9 is a cross-sectional diagram of disassembled parts of a dental implant according to a fourth embodiment of the present invention.
FIG. 10 is a cross-sectional diagram illustrating an assembly of parts illustrated in FIG. 9.
FIGS. 11A, 11B, and 11C illustrate tightening process of a lower abutment in the present invention shown in FIG. 9.
FIGS. 12A and 12B are cross-sectional diagrams illustrating a tightening part between a fixture and a lower abutment in the present invention shown in FIG. 10.
FIG. 13 is a cross-sectional diagram illustrating disassembled parts of a dental implant according to a fifth embodiment of the present invention.
FIG. 14 is a cross-sectional diagram of an assembly of the parts shown in FIG. 13.
FIG. 15 is a cross-sectional diagram illustrating disassembled parts of a dental implant according to a sixth embodiment of the present invention.
FIG. 16 illustrates disassembled parts of upper and lower abutments of a dental implant according to another embodiment of the present invention.

### [Best Mode]

Hereinafter, exemplary embodiments of a dental implant according to the present invention will be described in detail with reference to the attached drawings.

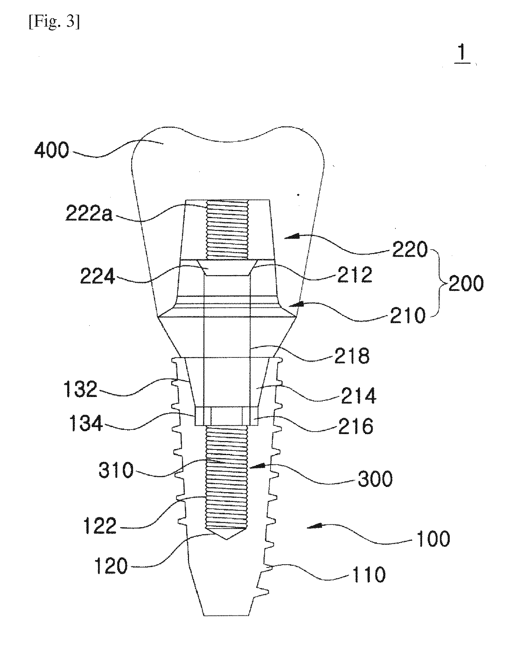

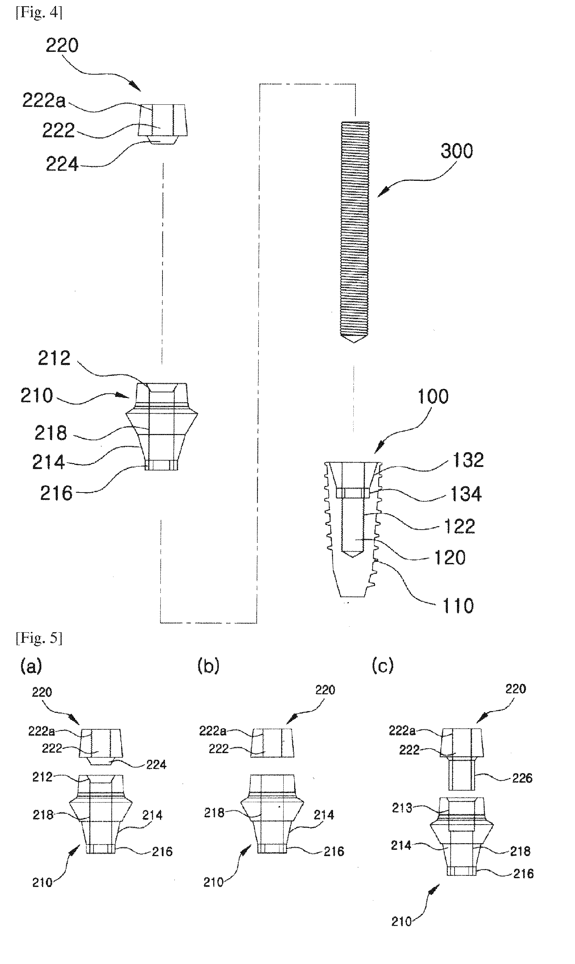

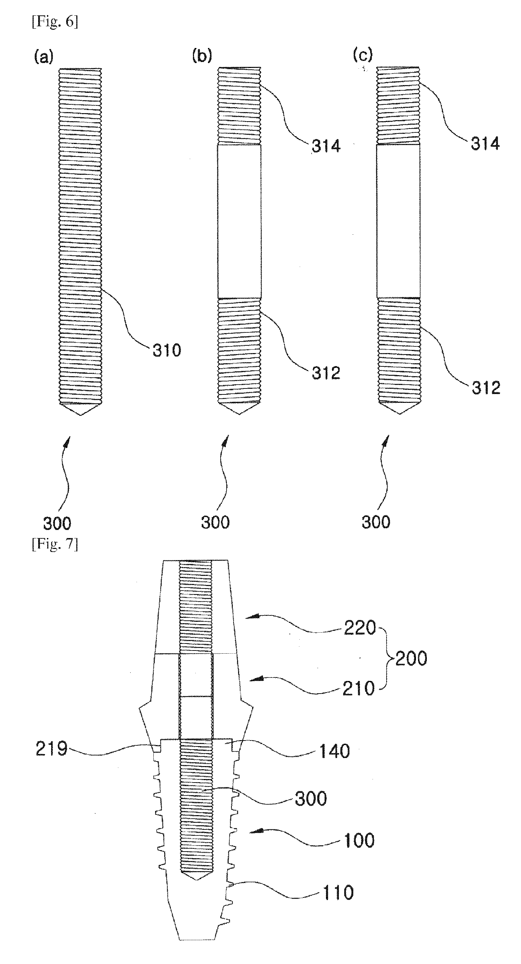

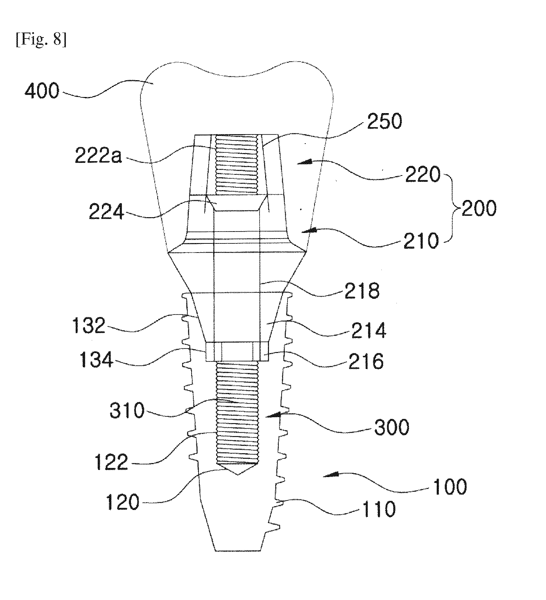

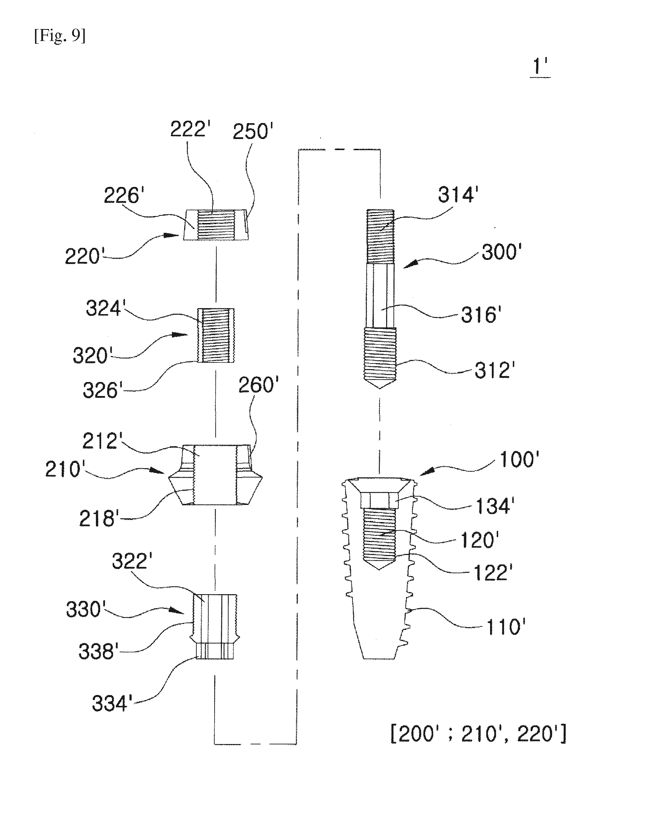

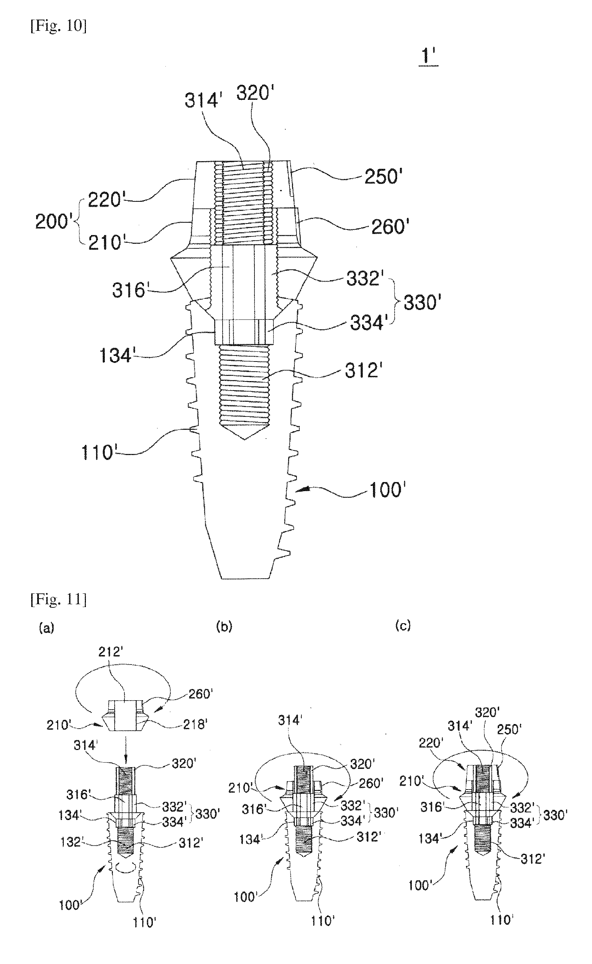

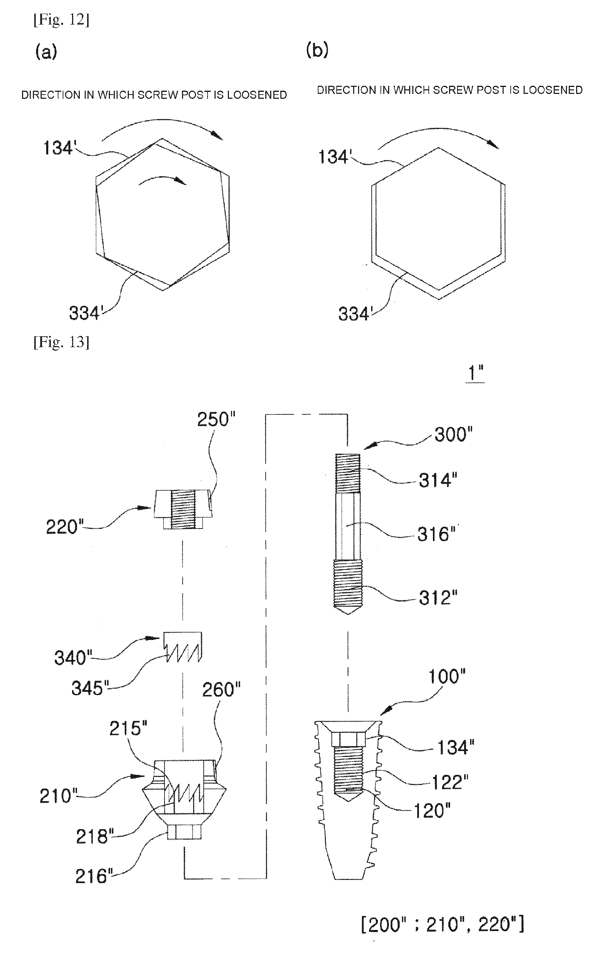

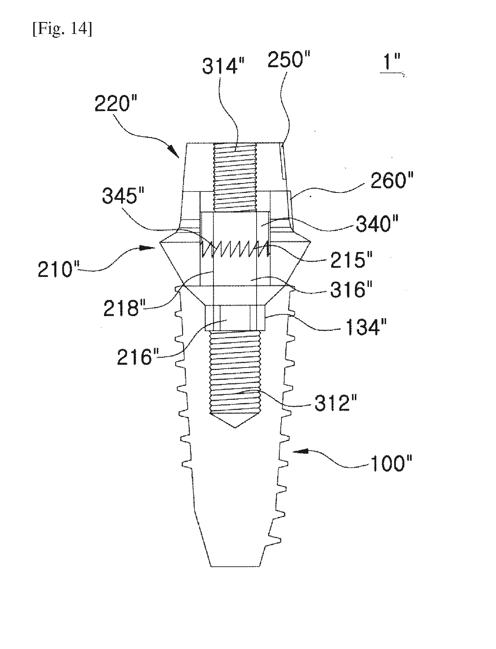

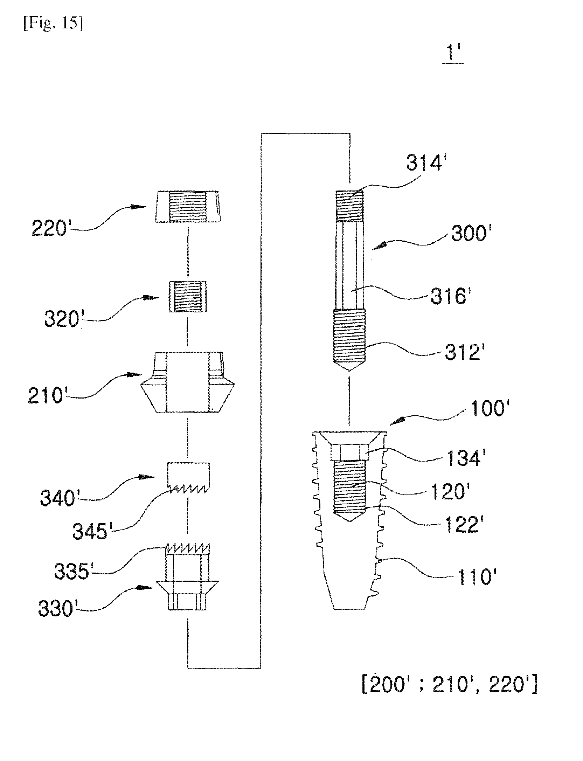

FIG. 3 is a cross-sectional diagram of a dental implant according to an embodiment of the present invention, FIG. 4 is a cross-sectional diagram disassembled parts of the dental implant of FIG. 3, FIGS. 5A, 5B, and 5C are cross-sectional diagrams separately illustrating the embodiment of an abutment in the invention shown in FIG. 3, FIGS. 6A, 6B, and 6C illustrate a screw post according to an embodiment of the present invention shown in FIG. 3, FIG. 7 is a cross-sectional diagram of a dental implant according to a second embodiment of the present invention, FIG. 8 is a cross-sectional diagram of a dental implant according to a third embodiment of the present invention, FIG. 9 is a cross-sectional diagram of disassembled parts of a dental implant according to a fourth embodiment of the present invention, FIG. 10 is a cross-sectional diagram illustrating an assembly of parts illustrated in FIG. 9, FIGS. 11A, 11B, and 11C illustrate tightening process of a lower abutment in the present invention shown in FIG. 9, FIGS. 12A and 12B are cross-sectional diagrams illustrating a tightening part between a fixture and a lower abutment in the present invention shown in FIG. 10, FIG. 13 is a cross-sectional diagram illustrating disassembled parts of a dental implant according to a fifth embodiment of the present invention, FIG. 14 is a cross-sectional diagram of an assembly of the parts shown in FIG. 13, and FIG. 15 is a cross-sectional diagram illustrating disassembled parts of a dental implant according to a sixth embodiment of the present invention.

The present invention relates to a dental implant in which a fixture 100 and an abutment 200 are fastened by using separate screw posts 300 and 300' so as to prevent a breakage of an implant screw fastening part and, at the same time, uniformly transmit force to the entire contact surface to prevent partial concentration of stresses, and screw fastening directions between the fixture 100 and the abutment 200 are changed so as to improve the coupling force between the fixture 100 and the abutment 200 and fundamentally prevent the screw from being loosened. The configuration of an embodiment thereof includes a fixture 100, an abutment 200, and a screw post 300 as illustrated in FIGS. 3 and 4.

In detail, the fixture 100 plays the role of the root of the implant 1 and is formed to have a shape of the root of a natural tooth, and a screw thread 110 is formed at the outer circumference thereof so as to be inserted into the alveolar bone.

Further, a first female screw 122, into which a screw post 300 is inserted, is formed at the upper center of the fixture 100, and a taper groove 132 and a rotation prevention groove 134, onto which the lower part of an abutment 200 is fitted, are formed to correspond to the lower shape of the abutment 200 at the upper portion of the first female screw 122.

Thereafter, the first abutment 200 is connected to the upper portion of the fixture 100 and an artificial tooth 400 is coupled with the upper portion. As such, the first abutment 200 plays a role of a connection post of the implant 1.

At this time, the abutment 200 includes a lower abutment 210 which is inserted into a fixture 100 and is then fixed and an upper abutment 220 which is fitted onto the upper portion of the lower abutment 210 to be rotatable. This is for making the coupling between the abutment 200 and the fixture 100 easy and improving the fixing force of the abutment 200, which will be described later.

Thereafter, the screw post 300 is inserted into the abutment 200 and the fixture 100 so as to couple the abutment 200 with the fixture 100 to be fixed. Here, a male screw 310 is formed at the outer circumference of the screw post 300.

In detail, a coupling hole 222, where a second female screw 222a has been formed, is formed at the center part of the upper abutment 220, a penetration hole 218 is formed at the center part of the lower abutment 210, a fastening groove 120, where the first female screw 122 has been formed at the sidewall, is formed at the center part of the fixture 100 so that the fastening groove 120, where the first female screw 122 has been formed at the sidewall, is formed in the center part of the fixture 100 so that a screw post 300, where a male screw 310 has been formed at the outer circumference, may be coupled and fixed with the upper abutment 220, the lower abutment 210, the first male screw 122 which is formed at the center part of the fixture 100 and the second female screw 222a which is formed in the upper abutment.

That is, according an exemplary embodiment of the present invention, after fastening the screw post 300 on the fixture 100, the lower abutment 210 and the upper abutment 220 are sequentially coupled with the upper portion thereof. Here, first, the screw post 300 is inserted into the fastening groove 120, which has been formed on the fixture 100 which has been inserted into the alveolar bone, so as to be coupled and fixed with the first female screw 122 which has been formed at the sidewall of the fastening groove 120.

Thereafter, the lower abutment 210 is coupled with the fixture 100 by being inserted into the screw post 300. Here, the bottom part of the lower abutment 210 is set to be inserted into the upper portion of the fixture by being inserted into the screw post 300 through the penetration hole 218 which has been formed on the lower abutment 210.

At this time, though not illustrated, a female screw may be formed at the sidewall of the penetration hole which has been formed in the center of the lower abutment 210 so that the lower abutment 210 is screw-coupled at the outer circumference of the screw post 300.

Thereafter, if the upper abutment 220 is coupled and fixed with the upper portion of the screw post 300 by using the second female screw 222a which has been formed in the abutment 220, the coupling between the fixture 110 and the abutment 220 is completed. Here, the coupling between the fixture 100 and the abutment 200 may become easy and accurate by the above-mentioned coupling scheme, and the area, where the fixture 100 and the abutment 200 are screw-coupled, increases, and thus the coupling force between the fixture 100 and the abutment 200 may increase.

Further, the screw post for coupling the fixture 100 and the abutment 200 is separated prepared and the portion, which is screw-coupled with the screw post 300, is separately configured to the inside of the fixture and the inside of the abutment 220 so that the load at the time of mastication operation such as chewing foods may be distributed, thereby minimizing the danger of a breakage of the screw post 300 and easily removing the broken screw post 300.

Further, the male screw 310, which is formed at the outer circumference of the screw post 300, may be formed to be separated into the first male screw 312 and the second male screw 314 as shown in FIGS. 6B and 6C. Here, the first male screw 312 may be formed at the outer circumference of the bottom part of the screw post 300, i.e., the part which is coupled with the first female screw 122 which has been formed in the fixture 100, and the second female screw 314 is formed at the outer circumference of the upper end part of the screw post 300, i.e., the part which is coupled with the second female screw 222a which has been formed on the upper abutment 220.

At this time, the first female screw 122 and the first male screw 312, and the second female screw 222a and the second male screw 314 may be formed to have screw threads of the opposite direction. This is for maintaining the coupling force between the fixture 100 and the abutment 200 by fundamentally preventing the screw-coupling from being loosened.

In detail, when the first female screw 122 and the first male screw 312 are formed as right screws, the second female screw 222a and the second male screw 314 are formed as left screws. On the other hand, when the first female screw 122 and the first male screw 312 are formed as left screws, the second female screw 222a and the second male screw 314 are formed as rights screws so that the rotation direction of the screw post when the fixture 100 is coupled with the screw post 300 may be set to be opposite to the rotation direction of the upper abutment 220 when the screw post 300 is coupled with the upper abutment 220.

When the coupling part between the first female screw 122 and the first male screw 312 and the coupling part between the second female screw 222a and the second male screw 314 is about to be loosened by one direction rotation of the screw post 300, such a coupling scheme may fundamentally prevent the screw-coupling from being loosened by preventing further rotation of the screw post 300 as the coupling between the first female screw 122 and the first male screw 312 or the coupling between the second female screw 222a and the second male screw 314 which is coupled by the rotation in the opposite direction may become strong. As such, the strong coupling state between the fixture 100 and the abutment 200 may be maintained.

Further, the dental implant 1 may be assembled by variously selecting shapes of the upper and lower abutments 220 and 210 such as the height, gradient, and thickness by separately preparing the upper abutment 220 and the lower abutment 210. As an embodiment thereof, as illustrated in FIG. 5A, a projected part 224 is formed at the bottom of the upper abutment 220 and a placing groove 212 corresponding to the shape of the projected part 224 is formed on the upper end of the lower abutment 210, and thus the upper abutment 220 may be stably installed on the upper portion of the lower abutment 210.

At this time, the upper abutment 220 is fitted onto the lower abutment 210 to be rotatable to be coupled and fixed with the screw post 300, and thus the horizontal cross-section of the projected part 224 and the placing groove 212 are formed to have a round shape.

Thereafter, as illustrated in FIG. 5B, the upper abutment 220 may be simply placed on the upper part of the lower abutment 210 so as to be coupled only by the screw post 300, or as illustrated in FIG. 5C, the extension part of a cylindrical shape may be projected on the bottom of the abutment 220 and an insertion groove 213, in which the extension part 226 is inserted into the upper end of the lower abutment 210, may be formed.

At this time, a coupling hole 222, where a second female screw 222a is prepared in the upper abutment 220, is extended at the inside of the extension unit 226, and thereby the area, which is screw-coupled to the screw post, increases so as to improve the coupling force between the fixture 100 and the abutment 220 by the screw post 300.

Thereafter, a taper part 214 and a rotation prevention part are formed at the bottom of the lower abutment 210. Here, the taper part 214 is formed in a conical shape of which the diameter gets smaller toward the bottom, and allows the lower abutment 210 to be stably installed at the upper end part of the fixture 100.

A conical taper groove 132 corresponding to the shape of the taper part 214 is formed at the upper portion of the fixture 100, and thus when the lower abutment 210 is inserted into the fixture 100, the contact area between the lower abutment 210 and the fixture 100 is widened, and thus the coupling force may be improved by more stable installation.

Further, the rotation prevention part 216 is projected to have a polygon shape at the lower portion of the taper part 214. A rotation prevention groove 134, which is formed of a polygon corresponding to the shape of the rotation prevention part 216, is formed on the bottom of the taper groove 132 of the fixture 100, and thus when the rotation prevention part 216 is fitted onto the rotation prevention groove 134, the lower abutment 210 is prevented from being rotated in the stated which has been fitted onto the upper portion of the fixture 100, and thus the fixing force of the lower abutment 210, which has been fitted onto the fixture, may be improved.

Further, according to a second embodiment of the present invention, the above-described scheme of coupling the fixture 100 and the abutment 200 by using the screw post 300 may be applied, not only to the internal type implant in which the lower end part of the abutment 200 is inserted into the fixture 100, but also to the external type implant in which the upper end part of the fixture 100 is inserted into the lower end part of the abutment 200.

That is, the fixing part 140 is projected on the upper end part of the fixture 100, and the coupling groove 219, in which the fixing part 140 is fitted onto the lower end part of the lower abutment 210, is formed, and thus even when the fixture 100 is inserted into the inside of the lower abutment 220, a coupling structure by using the screw post 300 may be applied.

At this time, a coupling groove 219, which is formed at the lower abutment 210 and the fixing part 140 of the fixture, is formed in a polygon shape as in the rotation prevention part 214 and the rotation prevention groove 134, and thus the rotation of the lower abutment 210 in the state which has been fitted onto the upper part of the fixture 100 may be prevented.

Further, according to a third embodiment of a dental implant 1 according to the present invention, as shown in FIG. 8, one or more seating grooves 250 or seating ridges 260 may be further formed on the outer circumference of the upper abutment 210 and the lower abutment 210 and may play a role of strengthening the fixing force between the upper abutment 220 and the lower abutment 210.

In detail, an artificial tooth 400 is covered by using dental cement on the outer circumference of upper and lower abutments 220 and 210 in the state where upper and lower abutments 220 and 210 are coupled with the fixture by using a screw post 300 by the above-described process. At this time, when an upper abutment 220, which has formed a seating groove 250 on the outer circumference by using a dental bur, and a lower abutment 210, which has integrally formed a seating ridge on the outer circumference in the manufacturing process, are used, a projected part (not shown) corresponding to the shape of the seating groove 250 and a groove (not shown) corresponding to the shape of the seating ridge 260 are formed at the inner side surface of the artificial tooth 400.

Hence, if an artificial tooth 400 is attached on the upper abutment 220, where the seating groove 250 has been formed, and the lower abutment 210, where the seating ridge 260 has been formed, the projected part, which has been formed on the artificial tooth 400, is inserted into the seating groove 250, and the seating ridge 260, which has been formed in the artificial tooth 400, are inserted into the groove so that the upper abutment 220 and the lower abutment 210 maintain the fixed state without being loosened.

Further, the seating groove 250 and the seating ridge 260 increase the contact area between the upper and lower abutments 220 and 210 and the artificial tooth, and thus the seating groove 250 and the seating ridge 260 also increase the coupling force between the upper and lower abutments 220 and 210 and the artificial tooth 400.

At this time, the seating groove 250 or the seating ridge 260 may be selectively formed at the upper abutment 220 and the lower abutment 210. That is, the seating ridge 260 may be formed at the upper abutment 220 and the seating groove 250 may be formed at the lower abutment 210, or the seating groove 250 or the seating ridge 260 may be formed at both upper and lower abutments 220 and 210.

Further, according to a fourth embodiment of the dental implant 1' according to the present invention, as shown in FIG. 9, a screw post 300' may be composed of first and second male screws 312' and 314' and a post 316' which is formed between the first and second male screws 312' and 314'. The first male screw 312' is formed at the lower end part of the screw post 300' as in the above-described embodiments and is coupled with the first female screw 122' which is formed at the fastening groove 120 of the fixture 100' so as to fix the screw post 300' at the fixture 100'.

Thereafter, the second male screw 314' is formed on the upper end of the screw post 300', and the screw ring 320' is coupled with the outer circumference thereof so as to be inserted into the upper abutment 220'.

Unlike the above-described embodiments, the screw post 300' is not directly coupled with the upper abutment 220', but a screw ring 320', where a second female screw 324' is formed on the inner circumference and a third male screw 326' is formed on the outer circumference, is fitted onto the second male screw 315' of the screw post 300', and then the third male screw 326' of the screw right 320' is coupled and fixed with the first coupling hole 222' where a third female screw 226', which is formed at the inside of the upper abutment 222', has been formed. The screw coupling area between the screw post 300' and the upper abutment 220' increases by such a coupling scheme, and thereby the coupling force increases.

Further, a fastener 330' is fitted onto the outer circumference of the post 316' which is formed at the lower part of the second male screw 314' of the screw post 300'. Here, the fastener 330' is fitted onto the outer circumference of the post 316', and thus the fastener 330' may be rotated in a direction that the first male screw 312' of the screw post 300', which is coupled with the first female screw 122' which is formed in the fastening groove 120' of the fixture 100' by the tightening operation of the lower abutment 210', is loosened so that the lower abutment 210' may be fixed without trembling and the loosening phenomenon of the lower abutment 210' may be prevented.

In detail, the post 316' of the screw post 300' is formed in a polygon shape, and the polygon shape hole corresponding to the cross-section shape of the post 316' is formed at the inside of the fastener 330' so as to be fitted onto the external side of the post 316'.

Further, the fastener 330' is composed of a screw coupling part 332' and a rotation prevention part 334'. The screw coupling part 332 is formed on the upper part of the fastener 330', and a fourth male screw 338' is formed on the outer circumference thereof so as to be screw-coupled with the fourth female screw which is formed at the inside of the lower abutment 210'.

The rotation prevention part 334' plays the same role with the rotation prevention part 216 which is formed at the lower abutment 210 in the above-described embodiment and is fitted onto the rotation prevention groove 134' which is formed in the fixture 100'.

That is, the rotation prevention part 334' is formed in a polygon shape such as a quadrangle, a hexagon, etc. so as to form the same shape as the shape of the rotation prevention part 334, and thus when a fastener 330' is fitted onto the rotation prevention groove which has been formed on the upper end part of the fixture 100' and is inserted into the fixture 100', further rotation is prevented so as prevent the loosening phenomenon between the fastener 330' and the fixture 100'.

In detail, a hole, which is formed at the inside of the fastener 330' and the post 316' of the screw post 300', and the rotation prevention groove 134' formed on the fixture 100' and the rotation prevention part 334' of the fastener 330' are formed in a polygon shape so as to prevent rotation of the coupling part between the post 316' and the fastener 330' and the coupling part between the fixture 100' and the fastener 330'. However, as shown in FIG. 12A, each coupling part may not be closely attached due to the tolerance, etc. in the process of manufacturing the screw post 300', fastener 330', and the fixture 100', and thus trembling may occur after being coupled, and if such trembling is lengthened, the coupling part may be loosened.

Hence, in the state where the fastener 330' has been fitted onto the post 316' of the screw post, after coupling the lower abutment 210' with the external side of the screw coupling part 332' of the fastener 330', if the lower abutment 210' is rotated to be fastened, the fastener 330' is rotated a little bit in one direction, and thus the coupling part between the fastener 330' and the post formed in a polygon shape and the coupling part between the fixture 100' and the fastener 330' are closely attached in a direction in which the screw post 300' is to be rotated, and thereby the fixture 100' and the screw post 300', and the fastener 330' may be more firmly coupled by removing the deviation which may be generated in the manufacturing process.

At this time, the screw coupling direction between the fixture 100' and the screw post 300', i.e., the screw direction of the first female screw 122' and the first male screw 312', and the screw coupling direction between the lower abutment 210' and the fastener 330', i.e., the screw direction of the fourth female screw 218' and the fourth male screw 338', may be preferably set to be opposite to each other so that the coupling part between the post 316' and the fastener 330' and the coupling part between the fixture 100' and the fastener 330' may be closely attached in the direction in which the coupling between the fixture 100' and the screw post 300' is loosened.

That is, in the state where the first male screw 312' of the screw post 300' is fitted onto the fastener 120' of the fixture 100' where the first female screw 122' has been formed, after the rotation prevention part 334' is inserted into the rotation prevention groove 134' of the fixture 100' as the fastener 330' is fitted onto the outer circumference of the post 316' of the screw post 300', the lower abutment 210' is coupled with the external side of the screw coupling part 332' of the fastener 330'. At this time, when the first female screw 122' and the first male screw 312', and the fourth female screw 218' of the lower abutment 210' and the fourth male screw 338' of the screw coupling part 332' are formed in the opposite direction, if the lower abutment 210' is rotated to be fastened, as shown in FIG. 12B, the fastener 330' is rotated in the direction that the first male screw 312' of the screw post 300', which has been inserted into the fastener 120' of the fixture 100', is loosened, and thereby the coupling part between the post 316' and the fastener 330' and the coupling part between the rotation prevention groove 134' of the fixture 100' and the rotation prevention part 334' of the fastener 330' are closely attached without a gap in a direction in which the screw post 300' is about to be loosened. As such, the screw coupling between the fixture 100' and the screw post 300' is not loosened due to the polygon shape of the coupling part.

Further, the coupling of the screw post 300' may be fundamentally prevented from being loosened by changing the screw coupling direction of the fixture 100', the abutment 200', and the screw post 300', and the screw coupling direction of the first male screw 312' and the first female 122' may be set to be opposite to all other screw coupling directions.

That is, when the first male screw 312' and the first female screw 122' is set as a left screw or a right screw, the screw thread 110' formed on the fixture 100' and the screw thread formed on the second to fourth male screws 314', 326', and 338', and second to fourth female screws 323', 226', and 218' may be set as right screws or left screws so that the screw coupling may be fundamentally prevented from being loosened.

The screw of a currently mainly used implant is a right screw, and thus a case where the first male screw 312' and the first female screw 122' are left screws and the other screws are right screws will be used as an example.

First, the fixture 100', in which the screw thread 110' has been formed at the outer circumference, is inserted in the direction of the right screw.

Thereafter, the first male screw 312' of the screw post 300' is coupled with the first female screw 122' which has been formed on the fastening groove 120' of the fixture 100'. At this time, the first female screw 122' and the first male screw 312' are formed in the left screw direction so as to rotate the screw post 300' in the left direction so that the screw post 300' is inserted into the fixture 100'.

Thereafter, the fastener 330', which is formed of the screw coupling part 332' and the rotation prevention part 334', is fitted onto the external side of the post 316' of the screw post 300'.

Thereafter, the screw ring 320', in which the second female screw 324' has been formed at the inner circumference, is rotation-coupled with the second male screw 314' which has been formed on the upper part of the screw post 300'.

Thereafter, as shown in FIG. 11A, the lower abutment 210' is coupled with the outer circumference of the screw coupling part 332' of the fastener 330' through the second fastening hole 212' which has been formed at the lower abutment 210'. At this time, the fourth female screw 218 formed in the second fastening hole 212' and the fourth male screw 339 formed on the outer circumference of the fastener 330 are right screws, and thus the lower abutment 210' is rotated in a right screw direction so as to be coupled.

That is, as shown in FIG. 11B, if the lower abutment 210' is fitted onto the upper part of the screw ring 320' so as to be continually rotated in the right screw direction, the fastener 330' is rotate in the right screw direction, i.e., in the direction in which the first male screw 312' of the screw post 300 which has been inserted into the fastening groove 120' of the fixture 100' is loosened, and thus the coupling part between the post 316' and the fastener 330' and the coupling part between the fixture 100' and the fastener 330' are closely attached without a gap, and thus the screw coupling between the fixture 100' and the screw post 300' is not loosened due to the coupling part shape of a polygon shape.

Thereafter, as shown in FIG. 11C, the third female screw 226', which has been formed in the first coupling hole 222', is coupled with the third male screw 326' which has been formed on the outer circumference of the screw ring 320'. At this time, both the third female screw 226' and the third male screw 326 are right screws, and thus if the upper abutment 220' is rotated in a right screw direction, the upper abutment 220' descends while being rotated along the screw ring 320' so as to strongly give pressure to the lower abutment 210', and thereby the installation of a dental implant 1 according to the present invention is completed.

That is, in the structure of the dental implant 1', the biggest issue is the loosening of the screw coupling by the implant applied to the implant when used for a long time.

In the above-configured invention, the coupling between the fixture 100' and the screw post 300' is formed in the left screw direction, and thus the rotation in the right screw direction needs to be performed in order to loosen the coupling of the screw post 300'.

However, in the present invention, all screw couplings except the coupling between the fixture 100' and the screw post 300' have been formed in right screw direction, and thus when the screw post 300' is rotated in the right screw direction, the coupling force between the upper abutment 220' and the lower abutment 210', and the screw ring 320' and the fastener 330' become more firm, and thus the screw post 300' cannot be further rotated, thereby fundamentally preventing the loosening phenomenon by rotation of the screw post 300'.

At this time, though not separately illustrated, the structure of the upper abutment 220' and the lower abutment 210' may be formed in various shapes as in the above-described embodiments of FIGS. 5A, 5B, and 5C, and the seating groove 250' and the seating ridge 260' may be formed at the outer circumference of upper and lower abutments 220' and 210'.

Further, according to a fifth embodiment of the dental implant 1", as shown in FIG. 13, the feature is in that a first step ring 340" is inserted into the lower abutment 210". Here, the first step right 340" minutely rotates the lower abutment 210" in the state which has been inserted into the rotation prevention groove 134" of the fixture 100", in the direction in which the screw post, which has been inserted into the fixture 100", is loosened, thereby preventing the loosening of the screw post 300".

In detail, the screw post 300" is composed of first and second male screws 312" and 314" and a post 316" which is formed between the first and second male screws 312" and 314". Here, the post 316" is formed in a polygon shape such as a quadrangle and a hexagon.

Further, a polygonal penetration hole 218", which is fitted onto the outer circumference of the post 316", is formed at the insider of the lower abutment 210", and a first step part 215" of a sawtooth shape is formed on the upper end part of the penetration hole 218". Further, a rotation prevention part 216", which is inserted into the polygonal rotation prevention groove 134" formed at the inside of the upper part of the fixture 100", is formed at the bottom part of the lower abutment 210" in the same shape as that of the rotation prevention groove 134".

At this time, the sawtooth shape of the first step part 215" is formed to be slant upward toward the direction in which the screw post 300", which is coupled at the inside of the fixture 100", is loosened.

Further, a first step ring 340" is inserted into a space between the first step part 215" and the upper abutment 220". Here, a polygonal hole corresponding to the shape of the post 316" of the screw post 300" is formed at the insider of the first step ring 340", and a second step part 345" having the same shape as that of the sawtooth shape of the first step part 215" is formed at the bottom part of the first step ring 340".

That is, in the state where the first male screw 312" of the screw post 300" is coupled and fixed with the fastening groove 120", the lower abutment 210" is fitted onto the upper part of the screw post 300", the rotation prevention part 216" of the lower abutment 210" is inserted into a polygonal rotation prevention groove 134" which is formed in the fixture 100", and the polygonal penetration hole 218, which is formed at the inside of the lower abutment 210", is supported by the post 316" of the screw post 300", and thus the rotation of the lower abutment 210" and the screw post 300" is limited. Hence, the screw post 300", which is inserted into the fixture 100", is prevented from being loosened.

However, respective coupling parts, which are formed in a polygonal shape by the tolerance, etc. in the process of manufacturing the fixture 100", the lower abutment 210", and the screw post 300", i.e., the coupling part between the rotation prevention groove 134" of the fixture 100" and the rotation prevention part 216" of the lower abutment 210", and the coupling part between the penetration hole 219" of the lower abutment 210" and the post 316" of the screw post 300" may not be closely attached so that trembling may occur after being coupled, and such trembling is lengthened, the coupling part may be loosened.

Hence, after the first step ring 340" is set to be positioned at the inside of the lower abutment 210", i.e., the upper part of the first step part 215", by inserting the first step ring 340" to the external side of the post 316", if the upper abutment 220" is coupled with the second male screw 314" of the screw post 300", the upper abutment 220" gives pressure to the upper end part of the first step ring 340" while the upper abutment 220" descends, and thereby the first step ring 340" descends.

At this time, the second step part 345", which is formed at the bottom part of the first step ring 340", meets the first step part 215" which is formed in the lower abutment 210", and thus the first step ring 340" is rotated in the coupling direction (the clockwise direction on the basis of FIG. 14) between the fixture 100" and the screw post 300" along the inclined direction of the sawtooth, and the lower abutment 210", in which the first step part 215" is integrally formed, is rotated in the direction (counter-clockwise direction on the basis of FIG. 14) in which the coupling between the fixture 100" and the screw post 300" is loosened.

The coupling part between the rotation prevention groove 134" of the fixture 100" and the rotation prevention part 216" of the lower abutment 210", and the coupling part between the penetration hole 218" of the lower abutment 210" and the post 316" of the screw post 300" are completely attached not to have a minimum gap, and thereby the coupling force at respective coupling parts is maximized. Further, the screw post 300" cannot be rotated in a direction in which the coupling with the fixture 100" is loosened due to the polygonal shape which is formed by respective coupling parts, and thus the screw coupling is not loosened even after long time use.

Further, in the present embodiment, other components are the same as those in the previous embodiments, and thus detailed description thereof is omitted here.

Next, FIG. 15 shows a sixth embodiment of a dental implant 1' according to the present invention and is a result of combination of the fourth embodiment and the fifth embodiment.

In detail, according to the sixth embodiment, a first step part 335' having a sawtooth shape, which is inclined upward toward the direction in which the screw post 300', which is coupled with the inside of the fixture 100', is formed at the upper end of the fastener 33' which is fitted onto the outer circumference of the post 316' formed in a polygon shape. Further, a first step ring 340', where a second step part 345' of the same shape as that of the sawtooth shape of the first step part 335' is formed at the lower end, is inserted into a space between the fastener 330' and the screw ring 320', i.e., the upper part of the first step part 335'.

Hence, when the upper abutment 220' is coupled with the second male screw 314' of the screw post 300 in the coupling process of the implant 1', the screw ring 320' descends by the rotation of the upper abutment 220', and thus the first step ring 340', which is installed at the lower part, is pressured, and as such, the second step part 345' slides along the first step art 335 which is formed at the fastener 330' so that the fastener 330' is rotated in a direction in which the coupling between the fixture 100' and the screw post 300' is loosened. Hence, the coupling part between the post 316' and the fastener 330' and the coupling part between the fixture 100' and the fastener 330' may be closely attached without a gap in a direction in which the screw post 300' is about to be loosened, and the screw coupling between the fixture 100' and the screw post 300' is set not to be loosened due to the shape of the coupling part of a polygon shape.

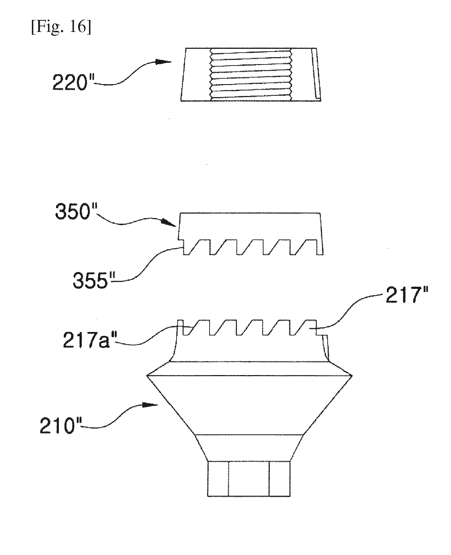

Further, the above-described step ring concept may also be applied to the coupling between the upper abutment 220" and the lower abutment 210". In detail, as shown in FIG. 16, a third step art 217" of a step shape including the inclined surface 217"a, which is inclined upward toward the direction in which the screw post 300", which has been coupled with the inside of the fixture 100", is loosened, is formed. Further, a second step ring 350", where a fourth step part 355" of the same shape as that of the third step part 217" has been formed, may be inserted into a space between the upper abutment 220" and the lower abutment 210".

That is, as in the above-described fifth embodiment, in the state where the fixture 100", the screw post 300", and the lower abutment 210" are sequentially coupled, after positioning the second step ring 350" at the upper part of the lower abutment 210", if the upper abutment 220" is coupled from the upper part of the second step ring 350", the second step ring 350" descends by the pressure of the upper abutment 220", and the fourth step part 355", which is formed at the bottom part of the second step ring 350", slides along the third step part 217" which has been formed on the upper end part of the lower abutment 210" so as to rotate the lower abutment 210" in a direction in which the screw post 300", which has been coupled with the fixture 100", is about to be loosened, and thus the coupling part between the polygonal fixture 100" and the lower abutment 210" is closely attached without a gap in a direction in which the screw post 300" is about to be loosened so that the screw post 300" is prevented from being rotated in a direction in which the screw post 300" is about to be loosened.

Hence, according to the dental implant 1, 1', or 1" according to the present invention, the coupling force between the fixture 100, 100', or 100" and the abutment 200, 200', or 200" is raised by using a separate screw post 300, 300', or 300" for the coupling between the fixture 100, 100', or 100" and the abutment 200, 200', or 200" so that the coupling force between the fixture 100, 100', or 100" and the abutment 200, 200', or 200" is raised, and the overall load on the screw-coupled portion is distributed so as to be transmitted. Hence, the danger of a breakage of the screw post 300, 300', or 300" may be minimized, and even when the screw post 300, 300', or 300" is broken, the broken screw post 300, 300', or 300" may be easily removed, and after the screw post 300, 300', or 300" is coupled with the fixture 100, 100', or 100", the abutment 200, 200', or 200" may be coupled and fixed with the upper part thereof so that the coupling between the fixture 100, 100', or 100" and the abutment 200, 200', or 200" may be more easily and accurately performed, and the screw post 300, 300', or 300" may be prevented from being loosened in various methods. As such, a firm and fixed sate may be mainlined without a trembling despite a tolerance which is generated in the process of manufacturing an implant 1, 1', or 1", and the loosening phenomenon of a screw may be fundamentally prevented even after a long time use.

The above-described embodiments illustrate the most desirable example of the present invention, but the present invention is not limited the embodiments. The shape of the screw post 300 or 300', which firmly couples the fixture 100 or 100' with the abutment 200 or 200', and the shape of the lower abutment 210, 210', or 220" and the upper abutment 220, 220', and 220" may be variously modified. Likewise, the embodiments can be modified in various manners within the scope of the technical concept of the present invention.

### [Industrial Applicability]

The present invention relates to a dental implant, and more particularly, to a dental implant in which a fixture and an abutment are together by a separate screw post so as to prevent the breakage of an implant screw tightening part and uniformly transmit forces over the entirety of a contact surface, to thereby prevent stresses from being partially concentrated, and in which the screw-tightening direction between the fixture and the abutment is variable so as to improve the coupling force between the fixture and the abutment and fundamentally prevent a screw from becoming loosened.

## Claims

1. A dental implant 1, 1', or 1" including a fixture 100, 100', or 100", where a screw thread 110 or 110' is formed at an outer circumference, an abutment 200, 200', or 200" which is inserted into the fixture 100, 100', or 100",
wherein the abutment 200, 200', or 200" is divided into a lower abutment 210, 210', or 210" which is inserted into the fixture 100, 100', or 100", and an upper abutment 220, 220', or 220" which is connected to an upper part of the lower abutment 210, 210', or 210", and the upper abutment 220, 220', or 220" and the fixture 100, 100', and 100" are coupled and fixed by the screw post 300, 300', or 300".

2. The dental implant of claim 1, wherein first and second female screws 122, 122', or 122" and 222a, where a screw post 300, 300', or 300" is coupled, are respectively formed in the fixture 100, 100', or 100" and the upper abutment 220, 220', or 220", and first and second male screws 312, 312', or 312" and 314, 314', or 314" are formed in the screw post 300, 300', or 300" at a position corresponding to the first and second female screws 122, 122', or 122" and 222a.

3. The dental implant of claim 2, wherein the first female screw 122, 122', or 122" and the first male screw 312, 312', or 312", and the second female screw 222a and the second male screw 314, 314', or 314" are formed to have screw threads of opposite directions.

4. The dental implant of claim 2, wherein a projected part 224 is formed at a bottom of the upper abutment 220, and a placing groove 212, into which the projected part 224 is fitted, is formed at an upper end of the lower abutment 210.

5. The dental implant of claim 2, wherein an extension part 226, where a second female screw 222a has been formed at an inner circumference, is projected at the bottom of the upper abutment 220, and a insertion groove 213, into which the extension part 226 is inserted, is formed at the upper end of the lower abutment 210.

6. The dental implant of claim 2, wherein a coupling groove 219 is formed at a lower part of the lower abutment 210, and a fixing part 140, which is fitted onto the coupling groove 219, is projected at an upper end of the fixture 100.

7. The dental implant of claim 1, wherein a seating groove 250, 250', or 250" of the upper abutment 220, 220', or 220" is formed at an outer circumference, and a seating ridge 260, 260', or 260" is formed at an outer circumference of the lower abutment 210, 210', or 210".

8. The dental implant of claim 2, wherein the screw post 300' or 300" comprises first and second male screws 312' or 312" and 314' or 314" and a polygonal post 316' or 316" formed between the first and second male screws 312' or 312" and 314' or 314".

9. The dental implant of claim 8, wherein a screw ring 320', where a second female screw 324' is formed at an inner circumference and a third male screw 326' is formed at an outer circumference, is formed at an outer circumference of the second male screw 315' of the screw post 300', and a first coupling hole 222', where a third female screw 226', which is coupled with a third male screw 326', is formed, is formed in the upper abutment 220'.

10. The dental implant of claim 9, wherein a fastener 330', where a fourth male screw 338' is formed at an outer circumference, is fitted onto a post 316' of the screw post 300', and a second coupling hole 212', where a fourth female screw 218', onto which a fourth male screw 338' is fitted, is formed at the lower abutment 210'.

11. The dental implant of claim 10, wherein a rotation prevention part 334' formed of a polygonal shape is formed at a bottom part of the fastener 330', and a rotation prevention groove 134', into which the rotation prevention part 334' is fitted onto, is formed at an upper part of the fixture 100'.

12. The dental implant of claim 10, wherein a first step part 335 of a sawtooth shape, which is inclined upward toward a direction in which a screw post 300', which is coupled with an inner side of the fixture 100', is formed at a upper end of the fastener 330', and a first step ring 340', where a second step part 345' of a shape corresponding to the first step part 335' is formed at a lower end, is formed between the screw ring 320' and the fastener 330'.

13. The dental implant of claim 10, wherein a screw direction of the first female screw 122' and the first male screw 312' is opposite to a screw direction of a screw thread 110', which is formed in the fixture 100', and second to fourth female screws 222a, 226', and 218', and second to fourth male screws 314', 326', and 338'.

14. The dental implant of claim 8, wherein a first step part 215' of a sawtooth shape, which is inclined upward toward a direction, in which a screw post 300", which is coupled with an inner side of the fixture 100", is loosened, is formed at an inside of the lower abutment 210", and a first step ring 340", where a second step part 345" of a shape corresponding to the first step part 215" is formed, is inserted into an inside of the lower abutment 210" in the upper part of the first step part 215".

15. The dental implant of claim 1, wherein a third step part 217" of a step shape including an inclined surface 217a", which is inclined upwards toward a direction in which a screw post 300", which is coupled at an inside of the fixture 100", is loosened, is formed at an upper end of the lower abutment, and a second step ring 350, where a fourth step part 355" of a shape corresponding to a third step part 217" is formed at a bottom, is installed between the lower abutment 210" and the upper abutment 220".
